Europäisches Patentamt

European Patent Office

Office européen des brevets

(11) Publication number: **0 366 874**
**A1**

## (12) EUROPEAN PATENT APPLICATION

(21) Application number: **89113731.7**

(22) Date of filing: **25.07.89**

(30) Priority: **04.11.88 HU 570788**

(43) Date of publication of application:
**09.05.90 Bulletin 90/19**

(84) Designated Contracting States:
**DE FR GB**

(51) Int. Cl.⁵ **F16K 17/28 , F16L 41/16**

(71) Applicant: **TISZANTULI GAZSZOLGALTATO VALLALAT**
**Rakoczi u. 184**
**H-4201 Hajduszoboszlo(HU)**

(72) Inventor: **Krupa, Ferenc**
**Tittel Pál u. 11**
**H-3300 Eger(HU)**

(74) Representative: **Richter, Werdermann & Gerbaulet**
**Neuer Wall 10**
**D-2000 Hamburg 36(DE)**

(54) **Automatic closing-opening device for plastic gas branch pipeline.**

㊌ The present invention relates to an automatic closing-opening device for plastic gas branch pipeline mounted into the end-section of the branch pipe which is joined to the plastic gas-distribution pipeline. The closing-opening device has a metallic closing member (5) pressed in suitable distance from the gas-distribution pipe (3) into a piece of pipe (2), said closing member (5) having in its centre a bore (8) concentrically with said branch pipe (1), said closing member (5) further having a cone-shaped outer mantle surface (7), said device further having in the direction of the gas flow in front of said closing member (5) a pinlike member (10) fixed in said piece of pipe (2) practically at right angle to the axis of said branch pipe (1), said device further having a ball (11) with a diameter greater than that of said bore (8) of said closing member (5), said ball (11) can move freely in the space between said closing member (5) and said pinlike member (10).

Fig. 1.

## Automatic closing-opening device for plastic gas branch pipeline

Technical Field

The present invention relates to an automatic closing-opening device for plastic gas branch pipeline which is mounted into the end-section of the branch pipeline where this pipeline is joined to the plastic gas-distribution pipe-line.

Background Art

Among the well-known gas-supplying methods especially those are frequently used by them the gas can be led near the consumers at a medium pressure, in hard polyethylene gas-distribution pipes. From the gas-distribution pipeline the gas flows through branch pipes to the consumers. The branch pipes especially have a relatively small diameter, though they are suitable to transport the necessary quantities of gas due to the medium pressure. The use of plastic pipes with relatively small diameter and branching pipes in gas-distribution systems are advantageous as a result of their low construction costs and good corrosion resistance, but disadvantageous is their sensitivity to mechanical damage and failure.

According to practical experiences the damage emerges most frequently in the branch pipes connected directly to the consumers. This can be caused by frequent digging of the soil and earthworks, by loading the ground over the branch pipe with laying and moving heavy objects, by insufficiently protecting parts of the branch pipes protruding over the earth, as well as by frequently failure of consumer's apparatuses and equipment.

In case of such failures and damages the gas flows from the branch pipe rapidly of relatively small volume into the surroundings, the pressure in the gas-distribution line also falls rapidly, the consumers connected to the network do not receive sufficient quantity of gas, consequently, accidents and failures can be occured. A great quantity of gas flows out of the damaged pipe, causing environmental pollution, accidents and explosion. The gas released into the environment causes also a significant economic loss. These damages and losses can not be avoided, because a long time can elapse from the observation of the failure to turning-off the defective part of the gas-distribution pipeline system and during this time, a great quantity of gas can accumulate at or near the failure location.

Various equipment have been developed to prevent and inhibit the hazardous consequences of the faults and leakages of the branch pipes which, in case of damage and leakage of any part of the gas pipeline system closes the defected section of the system and separates them automatically from the rest of the system. These well-known devices are metallic fittings mounted into the branch pipes and they act as back-pressure valves to interrupt the continuity of these pipes.

The disadvantage of these well-known equipments is that they are quite expensive consisting of relatively many components. They are joined with at least two bolts or solderings to the two parts of the branch pipe, and these joints can be often failured. Some parts of these well known equipment protrude far out from the mantle surface of the branch pipe, so that they can clash into other objects and can be exposed to loads from the ground damaging the joint between the plastic branch pipe and the equipment. The lifetime of the plastic branch pipe laid underground is very long, whereas the well-known metallic equipment corrode rapidly, therefore the branch pipe must be raised and changed even if the branch pipe itself is in useful and perfect condition. A further difficulty of the well-known equipments lies in that they can be joined only in a single direction and angle relative to the axis of the gas-distribution pipe, and this direction and angle is determined by the actual design of the equipment. The unfavourable consequence of this circumstance is that, during installation, mounting of the gas pipeline network special components, joints and mounting works are needed in order to adjust the branch pipe into the correct direction and angular position.

Disclosure of Invention

The aim of this invention is to develop an automatic closing-opening device for plastic gas branch pipe, consisting of low number of simple components, so that can be manufactured at moderate costs, can be mounted into the branch pipes without influencing their continuity, does not lap over their mantle surface, joining to the main pipe does not require bolts or solderings; its lifetime is equal to that of the branch pipe, and furthermore it is possible to join the branch pipe and the gas-distribution pipe at any optional directions or angular position over a horizontal plane containing the axis of the gas-distribution pipe.

According to the invention the given task can be solved by developing an automatic closing-opening device mounted into the end-section of the branch pipe, which is joined to the plastic gas-distribution pipe, characterised by a metallic closing member pressed into a piece of pipe in suitable distance from the gas-distribution pipe; said closing member having in its centre a bore concentric with said branch pipe; said closing member further having a cone-shaped outer surface; said device having in the direc tion of the gas flow in front of said closing member a pinlike member fixed in said piece of pipe practically at right angle to its longitudinal axis; said device further having a ball element with a diameter greater than that of said bore of said closing member; said ball can move freely in the space between said closing member and said pinlike member.

According to a preferred embodiment, the diameter of the outer cone-shaped surface of said closing member at its end with larger diameter is greater than the inner diameter of said piece of pipe, and the diameter of the outer cone-shaped surface of said closing member at its end with the smaller diameter is smaller than the inner diameter of said piece of pipe.

In a further preferred embodiment, said closing member has its side lying towards said pinlike member a cone-shaped run-up surface, being concentric with said bore and being connected to it.

It is further possible that said pinlike member consists of two pinlike elements positioned in the same plane and adjusted at an angle to each other.

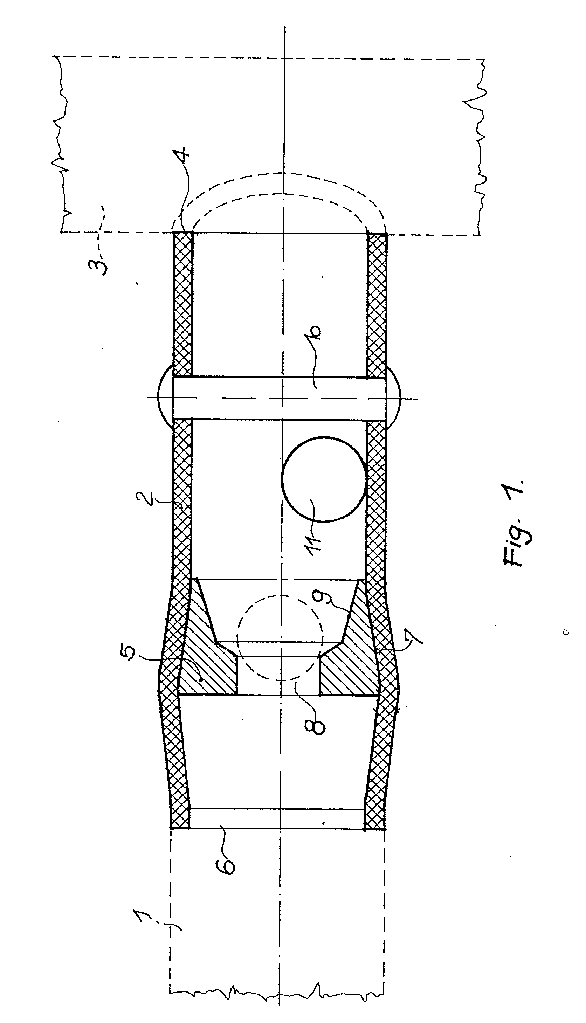

## Brief Description of the Drawing

The invention will be better understood from the following description of an illustrative example thereof, given with reference to the accompanying drawing, which illustrates schematically a vertical cross-section of a preferred embodiment of the closing-opening device according to the invention.

## Best mode of Carrying out the Invention

The preferred embodiment of the automatic closing-opening device according to the figure joins the gas branch pipe 1 on the left side of the figure with a piece of plastic pipe 2 having identical diameter to that of the gas-distribution pipe 3 on the right side of the figure. Gas branch pipe 1 and plastic piece of pipe 2 as well as the plastic piece of pipe 2 and gas-distribution pipe 3 can be joined to each other in such a manner which is conventional in the joining of plastic pipes.

In the embodiment shown in figure, piece of pipe 2 and gas-distribution pipe 3 are in vertical position to each other, but they can lie at any other angles relative to each other. In the latter case, the end 4 of the piece of pipe 2 is, of course in the plane corresponding to the given angle, rather than in the plane vertical to the longitudinal direction.

Before joining the branch pipe 1, the piece of pipe 2 and the gas-distribution pipe 3 to each other, a closing member 5 made of acid resistant steel or of any other metal, is pressed into the end 6 of the piece of pipe 2 lying towards the gas-distribution pipe 3. The outer surface 7 of the closing members is a cone-shaped one, its end 4 with the smaller diameter lying toward the gas-distribution pipe 3. At each end of the cone-shaped outer surface 7 cylindrical mantle surfaces can be provided. The end of the closing member 5 lying toward the branch pipe 1 has a diameter larger than the inner diameter of the piece of pipe 2, and the diameter of its other end is smaller than the inner diameter of the piece of pipe 2 so that it is possible to press the closing member 5 into the piece of pipe 2. When the closing member 5 is pressed into the piece of pipe 2 the end of the closing member 5 having a larger diameter enlarges the wall section of the piece of pipe 2 lying beside it. This enlarging, stretching is possible, because the plastic wall of the piece of pipe 2 is elastic. The deformed inner surface of the elastic wall of the piece of pipe 2 fixes the closing member 5 on that place where it was pressed.

In the closing member 5 there is concentric bore 8. At its end, lying towards the gas-distribution pipe 3 a cone-shaped run-up surface 9 is connected. The end with the larger diameter of the cone-shaped run-up surface 9 is located practically close to the inner surface of the piece of pipe 2.

Between closing member 5 and gas-distribution pipe 3 a pinlike member 10 is fixed in the inner space of the piece of pipe 2. In the embodiment shown in figure, this pinlike member 10 is a single pin fixed in the wall of the piece of pipe 2, but the pinlike member 10 can be realized, e.g. as a component pressed from a metal plate containing one or more pin-elements, which is fixed to the closing member 5 with two or more strips resting in longitudinal direction on the inner surface of the piece of pipe 2. When the pinlike member 10 is e.g. realized with two pin elements, then these elements are located in a common place at an optional angle to each other.

In the space between the closing member 5 and the pinlike member 10 there is a free movable ball 11, with a diameter larger than that of the bore 8.

In the preferred embodiment shown in figure it is assumed that the branch pipe 1 and the piece of pipe 2 are plastic pipes with identical diameters, but the diameter of the piece of pipe 2 can be chosen smaller, so that the piece of pipe 2 can be pressed fully into the end of the branch pipe 1. Instead of plastic, the piece of pipe 2 can be made of some other suitable, elastic material.

The closing-opening device according to the invention operates as follows:

When the branch pipe 1 is in its normal state, i.e. is not leaky or cracked, further the consumer's equipments are in their normal operating conditions, then the velocity of the gas flowing from the gas-distribution pipe 3 through the piece of pipe 2 is too low to roll the ball 8 into the socket of the bore 8 and does not shut the gas flow off. When the branch pipe 1 or a consumer's equipment is damaged, than the velocity of the gas flowing in the piece of pipe 2 increases abruptly and, as a consequence, the ball 11 rolls up the cone-shaped run-up surface 9 onto the bore 8, tightens it and holds it closed until the fault is repaired. After repairing the fault the gas leaks slowly beside the ball 11 into the branch pipe 1, fills it up, the pressure of gas equalizes on both sides of the ball 11 and, as a consequence, the ball 11 takes its position back as illustrated in the figure, and the gas supplying starts automatically.

The most favourable features of the closing-opening device according to the invention are as follows:

The device does not las over the mantle surface of the branch pipe, therefore it can't clash into other objects, the ground can not exert such a pressure on the device which can lead to a failure, e.g. a leak or a crack. Joining of a metal to a plastic is unnecessary, the reliability of such joints being much lower, than that of plastic-to-plastic ones. Corrosion problem do not occur and, hence the lifetime of the closing-opening device is practically equal to that of the branch pipe. The branch pipe can be joined at any desired direction and angle to the gas-distribution pipe over a horizontal plane containing the axis of the gas-distribution pipe, and so they can easily and rapidly joined to each other without using additional components. The device is simple, cheap, operates safely without the need of maintenance.

## Claims

1. Automatic closing-opening device for plastic gas branch pipeline, mounted into the end-section of the branch pipe, which is joined to the plastic gas-distribution pipeline characterized by a metallic closing member (5) pressed into a piece of pipe (2) in suitable distance from the gas-distribution pipe (3), said closing member (5) having in its centre a bore (8) concentric with said branch pipe (1), said closing member (5) further having a cone-shaped outer surface (7), said device having in the direction of the gas flow in front of said closing member (5) a pinlike member (10) fixed in said piece of pipe (2) practically at right angle to the axis of said branch pipe (1), said device further having a ball (11) with a diameter greater than that of said bore (8) of said closing member (5), said ball (11) can move freely in the space between said closing member (5) and said pinlike member (10).

2. Automatic closing-opening device according to claim 1 characterized by that the diameter of the cone-shaped outer surface (7) of said closing member (5) at its end with larger diameter is greater than the inner diameter of said piece of pipe (2), and the diameter of its end with smaller diameter is smaller than the inner diameter of said piece of pipe (2).

3. Automatic closing-opening device according to claim 1 or 2 characterized by that said closing member (5) has on its side lying towards said pinlike member (10) a cone-shaped run-up surface (9), being concentric with said bore (8), and being connected to it.

4. Automatic closing-opening device in accordance with any of the preceding claims characterized by having two or more pinlike elements (10) positioned in the same plane and adjusted at an angle to each other.

Fig. 1.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 921 662 (W.L. HAUFFE, N.C. SAHA) * Column 3, lines 7-61; figures * | 1 | F 16 K 17/28 F 16 L 41/16 |
| A | | 4 | |
| A | FR-A- 538 306 (F. JAQUET) * Figures * | 1,3 | |
| A | DE-C- 576 695 (F. & J. SCHUH) * Claim; fig. * | 1 | |

TECHNICAL FIELDS SEARCHED (Int. Cl.5)

F 16 L
F 16 K

The present search report has been drawn up for all claims

| Place of search | Date of completion of the search | Examiner |
|---|---|---|
| THE HAGUE | 06-02-1990 | BARTSCH A.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P0401)